# EUROPEAN PATENT APPLICATION

(11) **EP 4 737 853 A1**
(43) Date of publication of application: **06.05.2026**
(21) Application number: 24182553.8
(22) Date of filing: 17.06.2024
(51) Int. Cl.: G01C 21/00

(54) **3D DATA STRUCTURE**

(71) Applicant: Rovco Limited, Bristol BS1 6BX (GB)
(72) Inventor: Carrasco, Pep Lluis Negre, Bristol, BS1 6BX (GB); Maynard, Magnus, Bristol, BS1 6BX (GB)

(57) **Abstract**

A computer implemented method of populating a data structure suitable for conducting a survey in an environment, comprising: determining that a spatial unit of a set of spatial units is associated with a semantic classification label representative of an inspection asset; receiving inspection criteria associated with the inspection asset, wherein the inspection criteria comprises a threshold condition associated with an inspection sensor; receiving inspection sensor data, from the inspection sensor, representing the inspection asset; applying the threshold condition to the inspection sensor data to generate inspection data; and modifying an inspection data content of the spatial unit based on the inspection data.

## Description

### FIELD OF THE INVENTION

The present invention is in the field of autonomous inspection algorithms. Specifically, in the field of 3D data structures for autonomous inspection algorithms.

### BACKGROUND OF THE INVENTION

Semantic maps are a known 3D spatial data structure that divides a space into units and assigns one or more semantic classes to each unit. These data structures may be used for autonomous planning algorithms to guide the exploration and mapping of a survey environment.

It is desirable for an autonomous vehicle (e.g., a robot) to not only perform mapping of a survey environment but also to perform an inspection of one or more assets without human intervention. Currently, inspection of assets is controlled manually with skilled personnel. This disclosure relates to data structures which store and manipulate spatial information for autonomous asset inspection. This disclosure also relates to mechanisms to populate the data structures.

### SUMMARY OF THE INVENTION

A first aspect of the invention provides a computer implemented method of populating a data structure suitable for conducting a survey in an environment, comprising:
determining that a spatial unit of a set of spatial units is associated with a semantic classification label representative of an inspection asset;
receiving inspection criteria associated with the inspection asset, wherein the inspection criteria comprises a threshold condition associated with an inspection sensor;
receiving inspection sensor data, from the inspection sensor, representing the inspection asset;
applying the threshold condition to the inspection sensor data to generate inspection data; and,
modifying an inspection data content of the spatial unit based on the inspection data.

An advantage of at least the first aspect is that the method does not need to assume any target-specific requirement and can be agnostic to the inspection target. The data structure described in this first aspect allows for the definition of one or more semantic classification labels as inspection targets as well as the set of inspection sensors and their ranges, eliminating target-specific constraints. This enables an inspection planning algorithm using the data structure to discover, explore and inspect a desired asset (i.e., perform an autonomous inspection survey), in accordance with the inspection criteria.

Optionally, the computer implemented method of populating a data structure suitable of the first aspect is for conducting a survey in a harsh environment, such as a subsea environment.

Optionally, the set of spatial units is each associated with a modifiable content, the modifiable content comprising inspection field comprising the inspection data.

Optionally, the inspection further comprises a second threshold condition (e.g., max range) associated with the inspection sensor; the method further comprising: applying the second threshold condition to the inspection sensor data to generate second inspection data; and optionally, modifying the inspection data content of the spatial unit based on the second inspection data.

Optionally, the method further comprises: receiving a second inspection criteria (e.g., magnetometer probe) comprising a third threshold condition (e.g., probe measurement) associated with a second inspection sensor (e.g., probe); receiving second inspection sensor data (e.g., magnetism), from the second inspection sensor, representing the inspection asset; applying the third threshold condition to the inspection sensor data to generate second inspection data; and/or, modifying the inspection data content of the spatial unit based on the second inspection data.

Optionally, an inspection confidence value (e.g., confidence of camera range) is associated with the inspection data (e.g., range). Optionally, the method only receives the second inspection sensor data (e.g., magnetism) if the inspection confidence value is greater than an inspection confidence threshold.

Optionally, the method further comprises: determining that a second spatial unit of the set of spatial units is associated with a second semantic classification label representative of a second inspection asset (e.g., hull); receiving a third inspection criteria (e.g., range) associated with the second inspection asset and the inspection sensor (e.g. camera), wherein the third inspection criteria comprises a fourth threshold condition (e.g. min range); receiving third inspection sensor data (e.g., more range), from the inspection sensor, representing the second inspection asset; applying the fourth threshold condition to the third inspection sensor data to generate third inspection data; and, modifying an inspection field of the second spatial unit based on the third inspection data.

Optionally, the threshold condition, second threshold condition, third threshold condition, and/or fourth threshold condition are each one of: (a) a defined blurriness factor of captured inspection sensor data from the inspection sensor; (b) a defined number of captured inspection sensor data from the inspection sensor; (c) a defined maximum range between the inspection asset and the inspection sensor; (d) a defined minimum range between the inspection asset and the inspection sensor; (e) a defined total number of received depth points per unit volume, wherein the inspection sensor is a sonar sensor; (f) a defined measurement value (e.g., magnetic field, probe reading) of the inspection sensor; (g) a binary determination that the inspection sensor is in contact with the inspection asset; and, (h) a binary determination that a tool (e.g., ruler to measure marine growth) is in contact with the inspection asset.

Optionally, the method further comprising modifying, ending, or terminating the survey inspection once the inspection criteria is met.

Optionally, the set of spatial units is further associated with an attribute defining an exclusive spatial volume in a 3D survey environment, wherein the modifiable content further comprises a measurement field comprising occupancy data associated with the attribute.

Optionally, the method further comprising: receiving occupancy sensor data, from an occupancy sensor, representing the survey environment; and/or modifying the content of the measurement field of the spatial unit based on the occupancy sensor data.

Optionally, the content of each measurement field of the set of spatial units is modified simultaneously based on the occupancy sensor data.

Optionally, the method further comprises processing the occupancy sensor data to develop a SLAM 3D model of the survey environment.

Optionally, the occupancy sensor data represents two-dimensional image data. Optionally, the method further comprises: applying a 2D to 3D transformation to the occupancy sensor data to generate 3D occupancy data; and/or modifying the content of the measurement field of the spatial unit based on the 3D occupancy data.

Optionally, the inspection sensor is the occupancy sensor.

Optionally, the modifiable content further comprises a semantic label field comprising a semantic classification label.

Optionally, the method further comprises: determining a semantic classification label of the inspection asset based on classification sensor data, from a classification sensor; and/or modifying the content of the semantic label field of the spatial unit based on the semantic classification label.

Optionally, the method further comprises: determining that the semantic label field of the spatial unit is occupied by a previous semantic classification label; and/or, performing probabilistic based data-fusion to determine the content of the semantic label field based on the previous semantic classification label and the semantic classification label.

Optionally, a semantic inference step determines the semantic classification label based on the occupancy sensor data.

Optionally, the semantic inference step also determines a confidence value associated with the semantic classification label.

Optionally, the classification sensor data represents two-dimensional image data. Optionally, the method further comprises: performing semantic segmentation on the classification sensor data to generate a 2D segmentation map; determining that the 2D segmentation map contains the inspection asset; applying a 2D to 3D transformation to the 2D segmentation map to generate a 3D segmentation map comprising one or more semantic classification labels; and/or, modifying the content of the semantic label field of the spatial unit based on the 3D segmentation map.

Optionally, the inspection sensor is the classification sensor.

A second aspect of the invention provides a computing system for performing the method of the first aspect, the computing system comprising:
an occupancy sensor;
an inspection sensor;
a data processor configured to:
perform an inspection planning algorithm to plan a path for a mobile vehicle to follow which fulfils an inspection criteria, wherein the path is planned via a 3D model of the environment comprising a set of spatial units; and,
perform the method of the first aspect.

Optionally, the computer system of the second aspect is a harsh environment computer system, such as a subsea environment computer system.

Optionally, some or all of the components of the computing device are contained within a casing defining a sealed interior space for isolating the components from the subsea or other harsh environment.

Certain features of the claims are described as being first, second, third, fourth, etc. These may be different or the same to each other. These are also merely labels to distinguish the features of the claims for the purposes of clarity, and as such, these labels are interchangeable for the purposes of claim amendment(s).

### BRIEF DESCRIPTION OF THE DRAWINGS

Embodiments of the invention will now be described with reference to the accompanying drawings, in which:
Figure 1 shows an example of a 3D spatial data structure composed of voxel units.
Figure 2 shows a representation of a computer system for providing sensor measurements and populating content associated with a 3D spatial data structure.
Figure 3 shows a simplified 2D representation (top view) of a 3D spatial data structure and an occupancy sensor.
Figure 4 shows a simplified 2D representation (top view) of part of a 3D spatial data structure.
Figure 5 shows a simplified 2D representation (top view) of part of a 3D spatial data structure comprising associated content and an inspection sensor.
Figure 6 shows a system for operating a mobile vehicle to perform a survey.
Figure 7 shows an example a 3D spatial data structure composed of voxel units with respect to a sensor positioned offset from a mobile vehicle.
Figure 8 shows a representation of a computer system for providing sensor measurements and populating content associated with a 3D spatial data structure.

### DETAILED DESCRIPTION OF EMBODIMENT(S)

By way of a non-limiting overview, a mobile vehicle (such as an Autonomous Underwater Vehicle (AUV)) comprising a computing device receives occupancy sensor data, semantic sensor data, and inspection sensor data. The mobile vehicle operates in an environment to conduct a survey (or inspection) of specific objects (i.e., inspection assets) within the environment. The occupancy sensor data may be used to determine the presence or absence of an object in the environment. The occupancy sensor may be used to efficiently generate 3D voxel models or a 3D voxel map of the environment including 3D voxel models, such as, a simultaneous localisation and mapping (SLAM) 3D model. The semantic sensor may be any sensor suitable for determining semantic information associated with a generated 3D model. In particular, the semantic sensor data may be used to determine and identify an inspection asset (or, a component part of an inspection asset) which the mobile vehicle intends to inspect. The inspection sensor may be any sensor suitable for inspecting an inspection asset, for example, a camera may perform a visual inspection, and a probe may perform a conductivity inspection of the inspection asset. Each inspection asset may be associated with inspection criteria: a set of threshold conditions which are used to determine if an inspection asset is suitably inspected. The inspection criteria may be inspection sensor dependent, for example, a threshold condition may define an acceptable conductivity of the inspection asset, and thus this threshold criteria is dependent on a conductivity probe. Based on the outcome of thresholding, a data structure element associated with the inspection element may be modified/updated to indicate that a voxel representing at least part of the inspection asset has been inspected, i.e., inspection data, such as, inspection metadata. By assigning inspection data to each voxel of the inspection asset, it is possible for a mobile vehicle to perform autonomous inspection without any prior knowledge of the asset.

In harsh environments, such as subsea, computing resources are often constrained due to protective casings, for example, computing space and temperature dissipation may be restricted. In addition, communications between the computing device on a vehicle and a larger network may also be restricted in speed or throughput. Embodiments of the invention provide efficiency increases enabling a computing device to better operate in harsh environment scenarios.

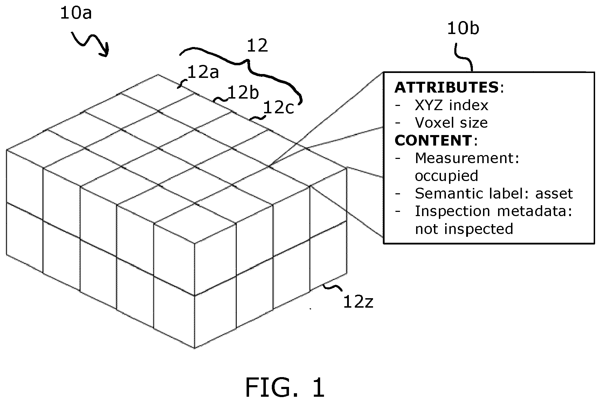

Figure 1 shows an example of a 3D spatial data structure 10a composed of voxel units 12a-12z. The 3D spatial data structure 10a may be suitable for commanding an autonomous vehicle which may store and manipulate spatial information as part of an autonomous planning algorithm for conducting an inspection survey (herein, survey). The 3D spatial data structure 10a may also be used by an operator to operate a mobile vehicle through the environment based on the 3D spatial data structure 10a.

The 3D spatial data structure 10a represents an environment (i.e., a physical volume in space). A mobile vehicle may be operating within the environment. A collection of objects may be present within the environment, of which some objects may be defined as inspection assets. Inspection assets are objects which the mobile vehicle is configured to inspect as part of a survey. In some examples, once the mobile vehicle has sufficiently inspected all of the inspection assets, then the survey may end. As the mobile vehicle operates within the environment, it may add data to the 3D spatial data structure 10a, which may be used for simultaneous localisation and mapping (SLAM), object identification, and to determine if an inspection asset is sufficiently inspected. The mobile vehicle may initially enter the environment and not know where the inspection assets are, therefore, the mobile vehicle may operate within a predetermined bounding box of the environment, until an object or inspection asset is identified. Alternatively, the mobile vehicle may initially operate to follow a heading direction, or operate to follow a predetermined search pattern to find and identify an object or inspection asset. Once an object (e.g., inspection asset) is identified the mobile device may be configured to follow the object to complete the survey.

The 3D spatial data structure 10a is composed of spatial units that divide the volume, i.e., voxels. These spatial units 12 may be represented by different shapes (e.g., cubes, rectangles, etc.). The spatial units 12 may not overlap in space. The spatial units 12 may be different shapes or sizes but may still tessellate together. For example, the spatial units 12 may be units of an octree-type structure (i.e., a Sparse Voxel Octree). Each spatial unit 12a, 12b (herein called voxels 12) represents an exclusive spatial volume in a 3D survey environment, i.e., a unique space in the entire 3D spatial data structure. Each voxel may have associated content 10b comprising a set of unique attributes (e.g., XYZ index; and voxel size) and modifiable content (e.g., measurement (e.g. occupied); semantic label (e.g., asset); and inspection metadata (e.g., not inspected)). Each voxel corresponds to a specific location in the environment defined by its unique attribute.

Each unique attribute may comprise the position or index of a corresponding voxel 12a in the 3D spatial data structure 10a, the position of that voxel 12a in the environment (e.g., latitude/longitude/elevation, XYZ position, etc.), the unit shape type of the voxel 12a (e.g., cube), and/or the shape dimensions of the voxel 12a (e.g., size, radius), etc. The shape dimensions may be relative or absolute. These attributes may be sufficiently well defined to unequivocally identify a single spatial unit 12a into the 3D spatial data structure 10a.

The modifiable content is for characterising each spatial unit, the modifiable content may comprise at least one of: a measurement field; a semantic label field; and an inspection field. The modifiable content may be populated by sensors, inferred semantic information, and/or by planning algorithms, etc. The fusion of different measurements and/or metadata for a single modifiable content of a single spatial unit 12a may be done in a probabilistic manner or following certain rules (e.g., last measurement will prevail over past measurements). The 3D spatial data structure 10a can be built on one or more external servers (i.e., online), collecting the necessary data whilst the operator or planning algorithms control movement of the mobile vehicle within the environment, and manipulating the 3D spatial data structure 10a at the same time.

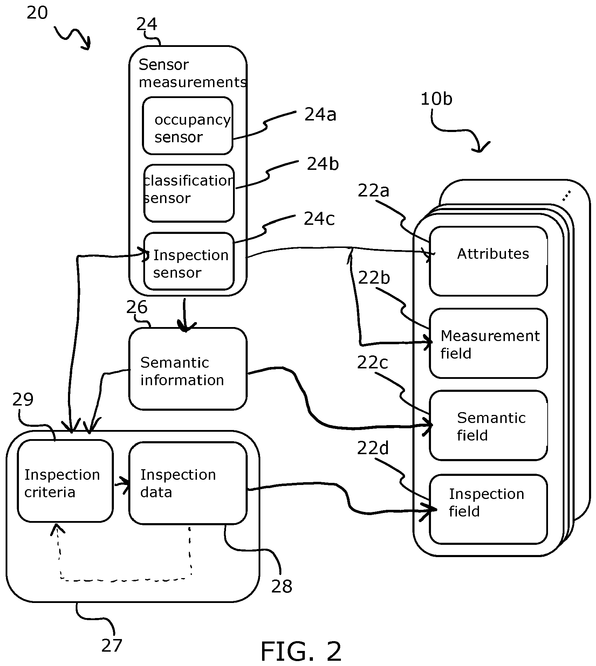

As shown in Figure 1, the modifiable content 10b comprises: a measurement field; a semantic label field; and an inspection field. The measurement field comprises an occupancy associated with the attribute. The semantic label field comprises a semantic classification label. The inspection field may comprise inspection data (e.g., inspection metadata). The content 10b does not necessarily need to be a single software structure, for example the modifiable content 10b may be associated with one or more voxels 12. Specifically, the measurement fields and the semantic label fields may be in a different structure to the inspection field. Each structure can also have different attributes and resolution. In a multi-structure configuration (e.g., which may be used with an octree-type structure), the computer system 20 (described with reference to Figure 2) allows for the querying and manipulation of all three modifiable content types as if they were in a single software structure. That is, the content 10b may be stored in a single or multiple memory object. In the example of an octree-type structure, eight children of a parent node may be associated with unique attributes and measurement content, and the parent node may be associated with semantic label field and inspection field content (which are therefore associated with the eight children).

Advantageously, the 3D spatial data structure 10a may be used for autonomous inspection planning algorithms to guide the exploration of the environment. However, there are unique challenges associated with an autonomous inspection use case; for example, if inspection criteria (i.e., a set of inspection requirements) need to be accomplished. Inspection criteria are associated with the inspection asset and may describe how to sufficiently inspect the inspection asset. The 3D spatial data structure 10a described herein may comprise any semantic-like map structure with inspection content. This enables an inspection planning algorithm module to discover, explore and inspect a desired asset (i.e., perform an autonomous inspection survey), in accordance with the inspection criteria.

A target for inspection may comprise multiple inspection assets. For example, a subsea jacket structure may comprise one or more cables, one or more sacrificial anodes, one or more structural members, etc. Each inspection asset may have specific inspection requirements. Each inspection requirement defines a condition, which if met, designates that the inspection asset is sufficiently inspected. In addition, the autonomous inspection algorithms may change the inspection behaviour (vehicle speed, visual range, etc.) of the mobile vehicle to perform one or more inspection requirements associated with an inspection asset. For example, a mobile vehicle may be required to operate at a lower speed when inspecting a sacrificial anode, when compared to a cable.

Advantageously, an external inspection planning algorithm can be used with the 3D spatial data structure 10a and can query and manipulate the 3D spatial data structure to discover, explore and inspect the inspection asset(s) simultaneously, without any prior knowledge or map of the survey environment. The 3D spatial data structure 10a may be queried and manipulated by external algorithms, for example, inspection planning algorithms. The 3D spatial data structure 10a may be queried to retrieve an individual spatial unit or a set of spatial units identified by their respective unique attribute.

Figure 2 shows a representation of a computer system 20 for providing sensor measurements and populating content 10b associated with the 3D spatial data structure 10a. That is, it is an architecture for the building of the 3D spatial data structure 10a.

The computer system 20 can be arranged to form part of a vehicle mounted system or other platform to perform 3D mapping and inspection. The computer system 20 may be arranged for deployment into harsh environments, such as continuous use underwater beyond two meters, subsea (e.g., between 0 and 50m (e.g., for a jacket structure), beyond 50m, beyond 300m, beyond 500m of depth), in the vacuum of space, on a platform, or the like. The platform can comprise a remotely operable or autonomous mobile platform such as an underwater remotely operable vehicle (ROV), an autonomous underwater vehicle (AUV), an unmanned air vehicle (UAV), an unmanned ground vehicle (UGV), an unmanned underwater vehicle (UUV), or an unmanned surface vehicle (USV). When applied to a vehicle such as an autonomous or unmanned system, the computer system 20 can be used with a SLAM module. The vehicle mounted system or other platform may carry a sensor suite on-board. The attached sensors may comprise a camera system, a range sensor (such as, a sonar sensor, a multibeam echosounder (MBES), a LiDAR), pose sensor, and/or probes. The vehicle may be tasked with surveying a subsea region or asset. The sensors may be rigidly or movably attached to a platform.

In one example, a platform to perform 3D mapping can comprise a subsea remotely operable or autonomous mobile vehicle including a propulsion system, a steering system and a command controller arranged to control the propulsion system and the steering system in accordance with command signals provided from a control station which is remote with respect to the mobile vehicle. The propulsion system and steering system of an autonomous system may be based on an output of a control module of mobile vehicle or the embodiment.

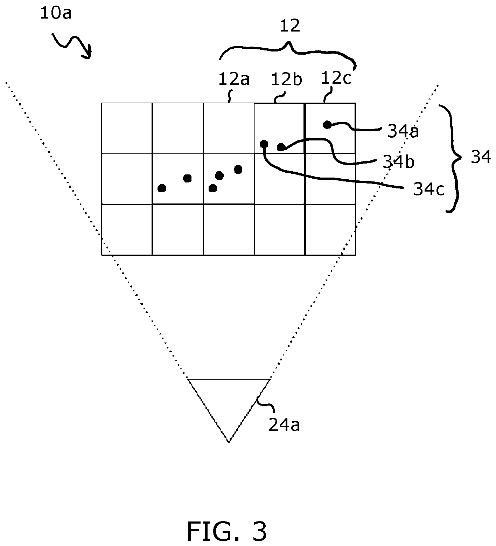

The content 10b of the 3D spatial data structure 10a may be modified by sensor measurements module 24, semantic information module 26 and inspection module 27. As the mobile vehicle moves around an environment, sensors, such as an occupancy sensor 24a, will receive sensor data to determine (e.g., using a SLAM algorithm) the current location of the mobile vehicle and its position relative to the many voxels of the 3D spatial data structure 10a. Thus, the computer system 20 will be able to use additional sensors (e.g., occupancy sensor 24a, classification sensor 24b, and inspection sensor 24c) and compute to write data to the content 10b of the 3D spatial data structure 10a. Each of the sensor measurements module 24, semantic information module 26 and inspection module 27, may write to one or more contents 10b of the 3D spatial data structure 10a depending on the received data from the sensors 24a, 24b, 24c and modules 24, 26, 27. Figure 2 will now be described with additional reference to Figures 3-6.

Figure 3 shows a simplified 2D representation (top view) of the 3D spatial data structure 10a and an occupancy sensor 24a. The sensor measurements module 24 of the computer system 20 receives occupancy sensor data 34, from the occupancy sensor 24a, representing a survey environment (more specifically points 34a, 34b, 34c, etc. represent objects within the survey environment). The sensor measurements module 24 may determine the unique attribute 22a of each of the voxels 12 within the field of view of the occupancy sensor 24a via known methods. The sensor measurements module 24 may determine the measurement field 22b associated with a unique attribute 22a and therefore, modify a modifiable content of a measurement field 22b of the of one or more voxels 12b, 12c based on the occupancy sensor data 34.

The occupancy sensor 24a may be any sensor(s), from which 3D points can be derived, such as stereo cameras, RGBD cameras, sonar, LIDAR. Some sensors will produce 2D images, 2D images with depth information, or 3D point cloud data. If the occupancy sensor 24a is a sensor which results in 2D occupancy data, then a 2D to 3D transformation may be used to derive 3D points.

The modifiable content of the measurement field 22b may be of type "unknown", "free" or "occupied", or a mix of all these values if a probabilistic approach is used to fuse multiple readings into individual measurement fields 22b.

When the sensor measurements module 24 determines that the occupancy sensor data 34a, 34b, 34c indicates the presence of one or more objects within a subset of voxels 12b, 12c, then the modifiable content of the measurement field 22b may be modified to data representing "free" or "unknown" (e.g., the white voxels shown in Figure 3) to data representing "occupied" (e.g., the grey voxels shown in Figure 3). That is, the sensor measurements module 24 may write the occupancy sensor data (e.g., "occupied", "free", "unknown") to the measurement field 22b of the subset of voxels 12b, 12c.

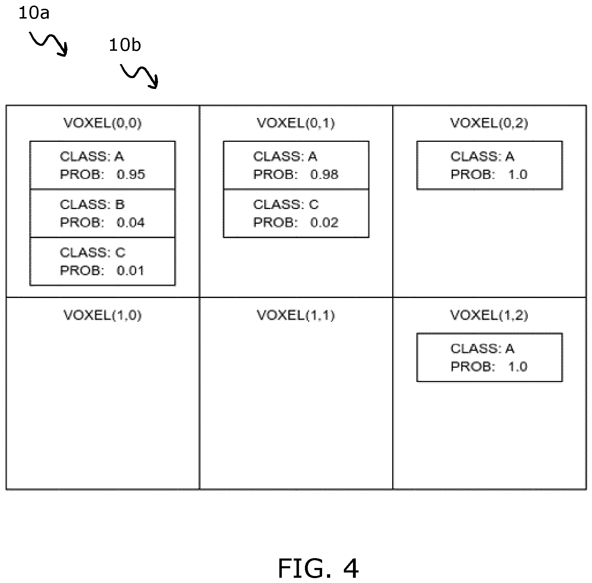

Figure 4 shows a simplified 2D representation (top view) of the 3D spatial data structure 10a comprising associated content 10b. The associated content 10b comprises unique attributes 22a and semantic label fields 22c. As shown, voxels may be associated with semantic data in a probabilistic approach. The semantic information module 26 of the computer system 20 receives classification sensor data, from a classification sensor 24b. The semantic information module 26 determines a semantic classification of an object in the environment (e.g., the inspection asset) based on classification sensor data, from a classification sensor 24b. A classification sensor 24b may be a camera sensor, sonar sensor, or LiDAR sensor. 2D classification sensor data (e.g., images) may be applied to an image segmentation algorithm or image segmentation Machine Learning (ML) model to generate a 2D segmentation map. Various models can be used, such as UNET or Mask-RCNN, to predict the most likely segmentation for each pixel. 3D classification sensor data (e.g., 3D points data from sonar or LiDAR) may be applied to a segmentation algorithm and/or a segmentation ML model, such as PointNET, to generate a 3D segmentation map. There may be multiple algorithms or models running in parallel or multitask models that can handle various inputs. Thus, a segmentation map may be generated based on the classification sensor data.

In addition, the segmentation map may be input into a semantic inference step (i.e., inference algorithm and/or inference ML model) to generate a semantic classification label. That is, the semantic information module 26 may perform semantic segmentation to generate a semantic segmentation map. The semantic segmentation map may contain one or more objects which can each be associated with a semantic classification label. The semantic segmentation map may correspond with the 3D spatial data structure 10a such that the semantic classification labels can be applied to corresponding semantic fields 22c. Examples of semantic classification labels may include an 'inspection asset', 'water', 'fish', 'boulder'. The semantic classification labels may also have associated confidence values, which may be used to determine how likely a given prediction is to be correct.

An inference algorithm/model may not be suitable for use with all types of classification sensors 24b. In some examples, there may not yet be inference algorithms and/or inference ML models available for some classification sensors 24b. If no inference algorithms and/or inference ML models are available, then the semantic classicisation label may be associated with an "UNKNOWN" label. If later a semantic sensor provides a class for this voxel, the "UNKNOWN" is replaced for the new class. A semantic sensor which is not a camera may provide a class without inference algorithms and/or inference ML models, e.g., if the semantic sensor is a magnetometer probe then the semantic sensor may provide a semantic classification label associated with "magnetic" or "non-magnetic".

The semantic information module 26 may identify the voxels of the 3D spatial data structure 10a which are associated with semantic classification labels of the semantic segmentation map. Each voxel of the 3D spatial data structure 10a is associated with a semantic label field 22c. The semantic label field 22c may store a semantic classification label. The semantic information module 26 is arranged to modify the semantic classification label (i.e., the content) of the semantic classification field 22c associated with each voxel of the 3D spatial data structure 10a. The semantic classification label may be any of the segmentation classes used in inference algorithms and/or inference ML models. Optionally, the semantic label field 22c may comprise multiple semantic classification labels, if a probabilistic approach is used to fuse multiple semantic determinations by the semantic information module 26 into individual semantic label fields 22c. The semantic information module 26 may generate multiple semantic classification labels due to multiple classification sensors 24b, multiple segmentation algorithms and/or ML models, multiple inference algorithms and/or inference ML models, or any combination thereof.

Figure 4 also shows an example of the contents 10b of the 3D spatial data structure 10a when multiple semantic labels are assigned to individual voxels in a probabilistic manner. Specifically, each voxel is associated with a unique attribute 22a and a semantic field 22c. Voxel with the unique attribute (0, 0) is also associated with: a first semantic classification label (class: A) with a confidence value of 95%; a second semantic classification label (class: B) with a confidence value of 4%; and a third semantic classification label (class: C) with a confidence value of 1%.

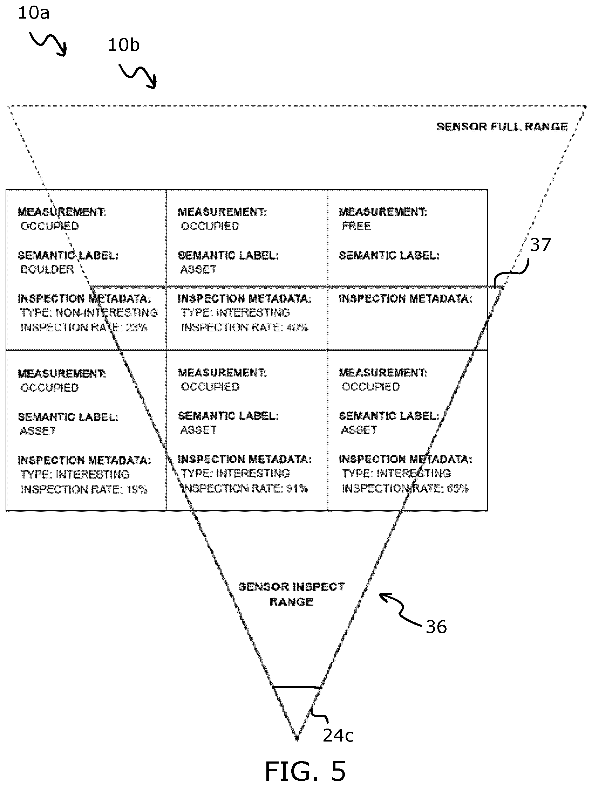

Figure 5 shows a simplified 2D representation (top view) of the 3D spatial data structure 10a comprising associated content 10b. The associated content 10b comprises unique attributes 22a (not shown), measurement fields 22b, semantic label fields 22c, and inspection fields 22d. The inspection module 27 of the computer system 20 receives inspection sensor data, from the inspection sensor 24c. The inspection module 27 may comprise an inspection data module 28 and an inspection criteria module 29. The inspection module 27 may modify the inspection field 22d of each voxel.

The purpose of surveying the environment is to inspect inspection assets (e.g., survey objects) within the environment. Once all of the inspection assets are suitably inspected, the survey may end. The inspection criteria module 29 may store a list of semantic classification labels which correspond to the survey objects. The inspection criteria module 29 comprises at least one inspection criteria which define when/if a survey object is suitably inspected. This definition takes the form of a threshold condition which is associated with the inspection sensor 24c and also the inspection asset. That is, depending on the inspection sensor and the inspection asset, the threshold condition may vary. The inspection criteria may be predetermined based on the known sensors available on the mobile device, and the target inspection assets for which the survey is intended to inspect. Alternatively, the inspection criteria may be automatically determined upon identification of an 'inspection asset' by the semantic information module 26 based upon a database of sensors, inspection assets, and associated threshold conditions.

The inspection criteria module 29 may receive semantic classification labels from the semantic information module 26. The inspection criteria module 29 may determine if a semantic classification label corresponds to an inspection asset, at a first voxel. If the inspection asset is identified, then the inspection data module 28 receives the inspection sensor data, from the inspection sensor 24c. Alternatively, the semantic information module 26 may directly identify an inspection asset as a specific semantic classification label. The inspection sensor data represents the inspection asset associated with the first voxel. The inspection criteria is associated with the inspection asset. The inspection criteria comprises a first threshold condition associated with the inspection sensor 24c; for example, the first threshold may be a maximum range of 5m which is associated with a camera sensor. The inspection asset is associated with the first threshold condition; for example, the maximum range depends on the semantic classification label of the inspection asset. The inspection data module 28 applies the threshold condition to the inspection sensor data to generate inspection data; for example, the inspection data may be binary '0' if the camera is greater than 5m from the inspection asset, and a binary '1' if the camera is less than or equal to 5m from the inspection asset. The inspection data module 28 may write to the inspection field 22d if the threshold condition is met; for example, if the inspection data associated with the first voxel is '1', then the inspection data module 28 may write data associated with "inspected" to the inspection field 22d. Thus, the inspection data associated with the first voxel may be modified based on the inspection data.

The inspection criteria may further comprise a second threshold condition (or more) associated with the inspection sensor 24c; for example, the second threshold may be a minimum range of 1m which is associated with a camera sensor. The inspection data module 28 may apply the second threshold condition to the inspection sensor data to generate second inspection data; for example, the second inspection data may be binary '0' if the camera is less than 1m from the inspection asset, and a binary '1' if the camera is greater than or equal to 1m from the inspection asset. The inspection data module 28 may write to the inspection field 22d based on a logical combination of the outputs from the threshold conditions, i.e., if the first and second threshold conditions are met. For example, if the first and second inspection data associated with the first voxel are both '1', then the inspection data module 28 may write data associated with "inspected" to the inspection field 22d.

The inspection criteria module 29 may identify a second inspection asset, or any number of inspection assets, at a second voxel. If the second inspection asset is identified, then the inspection data module 28 receives second inspection sensor data, from the inspection sensor 24c. The second inspection sensor data represents the second inspection asset associated with the second voxel. A second inspection criteria comprises a third threshold condition associated with the inspection sensor 24c; for example, the third threshold may be a maximum range of 10m which is associated with a camera sensor. The second inspection asset is associated with the third threshold condition; for example, the maximum range depends on the semantic classification label of the second inspection asset. The inspection data module 28 applies the third threshold condition to the second inspection sensor data to generate second inspection data; for example, the second inspection data may be binary '0' if the camera is greater than 10m from the second inspection asset, and a binary '1' if the camera is less than or equal to 10m from the second inspection asset. The inspection data module 28 may write to the inspection field 22d of the second voxel if the third threshold condition is met; for example, if the second inspection data associated with the second voxel is '1', then the inspection data module 28 may write data associated with "inspected" to the inspection field 22d (associated with the second voxel). Thus, the inspection data associated with the second voxel is modified based on the second inspection data.

An inspection sensor 24c may be a camera sensor, sonar sensor, LiDAR sensor, ultrasonic sensor, cathodic protection probe, etc. A sensor may be configured to operate as an occupancy sensor 24a, classification sensor 24b, and/or an inspection sensor 24c. The computer system may comprise multiple inspection sensors 24c.

The inspection data may take many forms, such as, a binary "inspected"/"not inspected", "inspection type", "inspection state", "inspection ratio" or any other inspection/planning data, or metadata that is useful for the computer system 20 optionally operating an autonomous inspection algorithm. The inspection data is not restricted to boolean values ("inspected" or "not inspected"), but it can also contain other inspection information. For example, inspection data may comprise data representing "GVI (General Visual Inspection) inspected", but the inspection field 22b may further comprise inspection data representing specific data, such as, inspected range: e.g., 2.205m, and the number of collected frames: e.g., 133.

Figure 5 also shows an example of how the computer system 20 can interact with the 3D spatial data structure 10a. A 2D representation of the 3D spatial data structure 10a consisting of six voxels is shown. A range of an inspection sensor 24c is illustrated by a trapeze 36. The inspection sensor 24c has a full range (the dotted line of Figure 5) and an inspection range (the solid line of Figure 5). The inspection range represents an upper threshold condition associated with an inspection criteria. Only the inspection data of the voxels covered by the inspection range will be affected by this process. Some of the voxels are already associated with an occupancy (in a measurement field) and a semantic classification label (in a semantic label field). In this example, only the object(s) identified by the semantic classification label "ASSET" are an inspection asset. The inspection field may be subdivided into two fields: 'inspection asset type' and the 'inspection rate'. The 'inspection asset type' subfield may comprise data associated with 'interesting' (i.e., the semantic classification label identifies an 'inspection asset') or'non-interesting' (i.e., the semantic classification label does not identify an 'inspection asset'). The 'inspection rate' (or inspection coverage) subfield may comprise a percentage representing how much of the volume of a voxel is inspected by the inspection sensor 24c. The 'inspection rate' subfield may advantageously be used if the definition of the voxels is relatively large in comparison to the field of view of the sensor, for example, if the voxels are 5*m*³ in volume. Alternatively or in addition, the 'inspection asset type' subfield may comprise data associated with a specific object or characteristic, such as 'anode', a 'j-tube', a 'detected corrosion', etc.

The inspection field 22d may only be updated if all of the inspection criteria are achieved. For example, if the inspection criteria associated with a camera comprises two threshold conditions, maximum and minimum range, then the inspection field 22d is only written to by the inspection data module 28 if a camera frame satisfies both threshold conditions.

The inspection module 27 may operate to cascade measurements based on the previous inspection sensor measurement. For example, the inspection data module 28 may only write to the 'inspection rate' subfield which is identified by the 'inspection asset type' subfield as 'interesting' and if the voxel's inspection sensor data satisfies the corresponding inspection criteria. Alternatively or in addition, the inspection data module 28 may only write to the 'inspection rate' subfield which is identified by the 'inspection asset type' subfield as a specific object or characteristic (e.g., 'anode, a j-tube, a detected corrosion, etc.) and if the voxel's inspection sensor data satisfies the corresponding inspection criteria.

The processes run by the inspection module 27 may occur simultaneously in time to the processes run by the sensor measurements module 24, and/or the semantic information module 26.

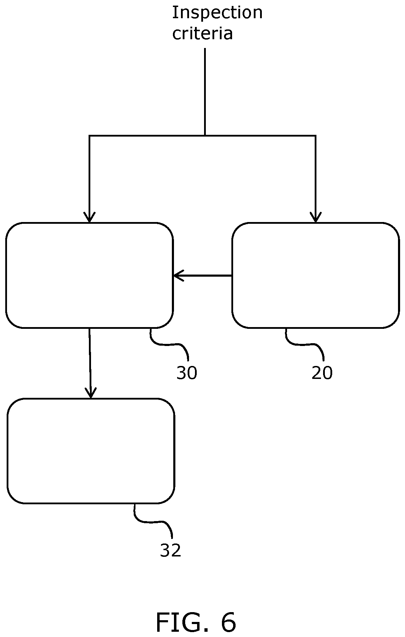

Figure 6 shows a system for operating a mobile vehicle to perform a survey. The mobile vehicle configured to operate the survey may perform autonomous inspection within the environment. However, the method of populating a 3D spatial data structure described with reference to Figures 2 to 5 may be independent of the systems which operate the autonomous inspection. An inspection planning algorithm module 30 may determine a path for the mobile vehicle to follow which fulfils the inspection criteria. That is, an inspection planning algorithm may comprise the functionality of an autonomous planning algorithm and additional functionality for path planning for suitable inspection of 'inspection assets'. The inspection planning algorithm module 30 may comprise a SLAM module. The inspection planning algorithm module 30 may store the inspection criteria or have access to the inspection criteria module 29. The inspection planning algorithm module 30 may receive real-time feedback from the computer system 20, such that if inspection criteria are not met, the mobile vehicle may be operated to revisit a certain area within the environment. The inspection planning algorithm module 30 may output an inspection path to the mobile device control module 32. The mobile device control module 32 may be configured to manoeuvre the mobile device such that the inspection path is followed. The inspection planning algorithm module 30 may be configured to operate any suitable path planning algorithm, such as PRM (Probabilistic RoadMap).

The inspection planning algorithm module 30 may be configured to define an inspection path in accordance with the inspection criteria (blurriness factor of captured frames, visual range, etc.). For example, a mobile vehicle may be required to operate at a lower speed when inspecting a 'sacrificial anode', when compared to a 'cable'. A lower speed may be desired to reduce a blurriness factor of captured frames.

Considering a practical example of the computer system 20 described with reference to Figures 2 to 5, a survey is conducted to inspect a subsea jacket structure. The survey is conducted with an autonomous underwater vehicle (AUV) acting as the mobile vehicle. An inspection criteria module 29 of the computer system 20 receives three inspection criteria associated with the subsea jacket structure. The three inspection criteria relate to: general visual inspection (GVI) of the entire structure and a marine growth survey, cathodic protection survey, and flooded member survey. Without the capability of the inspection module 27, these are typically the responsibilities of the crew of the vessel, such as an ROV pilot and inspector which may be inconsistent among different surveys, or even different parts of the same survey.

As part of the practical example of a subsea jacket structure inspection, a set of sensors is setup on the AUV to operate as occupancy sensors 24a. Specifically, stereo cameras and sonar. Optionally, the AUV also comprises a positioning and/or pose sensor used for the placement of all the sensor measurements relative to the same coordinate frame. The occupancy sensors 24a may be used by a SLAM module (not shown) to autonomously operate the AUV through the environment, or used by an operator to operate a ROV through the environment.

As part of the practical example, the sensor measurements module 24 (e.g., stereo cameras and sonar) identifies voxels (e.g., 12b, 12c) via their corresponding unique attribute 10b. In this example, the unique attributes represent XYZ positions of each voxel, which is mapped to a unique volume within the environment. The sonar or camera may measure 3D points within the environment and determine that the 3D points are within the boundaries of one or more voxels (e.g., 12b, 12c). The sensor measurements module 24 then updates the measurement field 22b with occupancy information associated with the identified voxels (e.g., 12b, 12c) of the 3D spatial data structure 10a. That is, the sensor measurements module 24 may write the occupancy information to the measurement field 22b associated with a voxel. The occupancy information associated with the identified voxels (e.g., 12b, 12c) comprises data representing "Occupied".

As part of the practical example, the stereo cameras of the AUV are also configured to operate as classification sensors 24b. This may occur simultaneously in time to the process run by the sensor measurements module 24.

Image data from the stereo cameras is sent to the semantic information module 26. An image segmentation algorithm and inference ML model are used to process the image data comprising occupied voxels to identify if the image data comprises objects which may be identified by a classification label: a "general structure", a sacrificial "anode", a "flooded member", "sea floor", etc. Assuming that a classification label is detected in an image pixel, that pixel is projected to a 3D spatial point, for example, using the camera geometry of the stereo camera, pose sensor, and/or a calibration. If a corresponding voxel includes the 3D spatial point associated with an "occupied" measurement field 22b, then the semantic information module 26 may write the semantic classification label to the semantic label field 22c of that voxel.

As part of the practical example, the inspection criteria module 29 receives three inspection criteria:
- A first inspection criteria associated with the semantic classification label of "general structure". The first inspection criteria comprises a first threshold condition, a second threshold condition, and a third threshold condition each associated with a stereo camera sensor as a first inspection sensor 24c. The first threshold condition is a maximum range of 3m. The second threshold condition is a minimum range of 2m. The third threshold condition is a marine growth depth measurement on the general structure.
- A second inspection criteria associated with the semantic classification label of "anode". The second inspection criteria comprises a fourth and a fifth threshold condition each associated with a cathodic protection probe as a second inspection sensor 24c. The fourth threshold condition is a detection that the cathodic protection probe is in contact with an object (i.e., the sacrificial anode). The fifth threshold condition is a conductivity measurement of the object (i.e., the sacrificial anode) by a cathodic protection probe.
- A third inspection criteria associated with the semantic classification label of "flooded member". The third inspection criteria comprises a sixth and a seventh threshold condition each associated with a ultrasonic sensor as a third inspection sensor 24c. The sixth threshold condition is a detection that the ultrasonic sensor is in contact with an object (i.e., the flooded member). The seventh threshold condition is an ultrasonic measurement of the object (i.e., the flooded member) by the ultrasonic sensor.

During the survey, threshold conditions may be modified based on other inspection sensor data. For example, a sonar sensor may determine a surface of an object, but due to turbid water conditions a frame from a camera operating within the maximum range may not show the surface of the object. In this example, the maximum range of the camera sensor may be reduced.

As part of the practical example during the survey, the first inspection criteria may be passively met by the AUV moving through the environment, if the first, second, and third threshold conditions are met. Alternatively, and with reference to Figure 6, the first inspection criteria may be met by operating the AUV autonomously (or with active control) to manoeuvre the AUV such that the first inspection criteria are likely to be met (e.g., by operating the AUV such that the distance between the inspection sensor and the "general structure" is between 2 and 3 meters with the depth sensor active), via the inspection planning algorithm module 30 of Figure 6. The image data from the stereo cameras is sent to the inspection module 27. The computer system 20 determines that the inspection sensor data maps to one or more voxels (e.g., voxels with the measurement field 22b set to "occupied", and a semantic field 22c set to "general structure"); for example, via the sensor measurements module 24, optional inspection planning algorithm module 30, or another module. Once the inspection module 27 determines that the first inspection criteria of one or more identified voxels is met, then the inspection data module 28 may write the inspection data to the inspection field 22d of each corresponding voxel. The inspection data may represent "GVI inspected", or a value of the range between the "general structure" and the inspection sensor.

As part of the practical example during the survey, the second inspection criteria may be met by operating the AUV autonomously (or with active control) to manoeuvre the AUV such that the second inspection criteria are likely to be met (e.g., by operating the AUV such that the AUV's cathodic protection probe is in contact with a sacrificial anode and making a conductivity measurement). Once the inspection module 27 determines that the second inspection criteria of one or more identified voxels is met, then the inspection data module 28 may write the inspection data to the inspection field 22d of each corresponding voxel. The inspection data, e.g., inspection metadata, may represent "conductivity inspected", or the measured conductivity value. If the inspection metadata represents "conductivity inspected", then the actual conductivity value may be stored outside of the 3D spatial data structure 10a. Although the actual conductivity value is useful, it is not required for the purpose of the 3D spatial data structure 10a (i.e., determining if all inspection criteria have been met, such that the survey is complete). The inspection data associated with the third inspection criteria may be updated similarly to described above.

In other examples, a set of inspection sensors 24c may be used. Inspection criteria for a survey may be determined based on the one or more intended inspection assets. The following list describes example inspection assets within an underwater environment, each with associated inspection sensor 24c, and inspection criteria:
- GVI (General Visual Inspection) may be applied to any inspection asset. This refers to a generic visual inspection of any underwater structure. If the inspection sensor 24c is a camera, then the inspection criteria may be:
   - Range: distance from the camera to the structure (i.e., inspection asset) is within one or more threshold conditions (e.g., minimum range, and maximum range).
   - Blurriness of captured frames: the captured frames are processed to determine a measure of a frame's blur effect (i.e., blurriness factor). The measure of blur is within a threshold condition (i.e., within a maximum measure of blur) indicating that the frame has little blur.
   - Number of captured frames: at least a minimum number of frames of a voxel of the underwater structure are recorded. This may be combined with the other inspection criteria such that the number of captured frames is not incremented unless the inspection module 27 determines that an image satisfied the range threshold condition and the blur threshold condition.
- Marine growth inspection may be applied to any inspection asset. This refers to the measurement of marine growth of any underwater structure. If the inspection sensor 24c is a stereo camera, then the inspection requirements can be:
   - Range: distance from the camera to the structure is within one or more threshold conditions (e.g., minimum range, and maximum range).
   - Points density: at least a minimum number of depth points per unit volume or area for the inspected environment is recorded with the sonar.
- The inspection asset may be a ship hull. For example, surveying of a ship hull for inspection of any kind (anomalies, corrosion, defects, parasitic loads, etc.). If the inspection sensor 24c may be a camera or a sonar, then the inspection criteria may be:
   - Range: distance from the inspection sensor 24c to the hull is within one or more threshold conditions (e.g., minimum range, and maximum range).
   - Number of captured frames: at least a minimum number of frames of a voxel of the underwater structure is recorded with the camera or sonar.
- The inspection asset may be boulder/debris. For example, surveying of the seabed for boulder of debris detection. If the inspection sensor is a sonar (usually side-scan sonars) or camera, then the inspection criteria may be:
   - Range: distance from the inspection sensor 24c to the boulder/debris (i.e., inspection asset) is within one or more threshold conditions (e.g., minimum range, and maximum range).
   - Points density: at least a minimum number of depth points per unit volume or area for the inspected environment is recorded with the sonar.
- The inspection asset may an unexploded ordnance (UXO) survey. For example, surveying of the seabed for UXO detection. This may be performed in two stages. In a first stage, a high-level survey is performed using towed magnetometers and/or sonar (e.g., side-scan sonars). If the inspection sensor is a magnetometer or sonar (usually side-scan sonars), then the inspection criteria may be:
   - Magnetometer: magnetometer value is measured (i.e., a binary threshold condition), and magnetometer values which are measured above a threshold condition (e.g., a minimum magnetometer value).
   - Range: distance from the inspection sensor 24c to the UXO is within one or more threshold conditions (e.g., minimum range, and maximum range), for both sensors.
   - Points density: at least a minimum number of depth points (e.g., sonar echos) per unit volume or area for the inspected environment is recorded with the sonar.

In a second stage, a list of potential targets is identified by the initial inspection criteria in the first stage, is the closely inspected using depth of burial sensor and/or camera. This task is usually performed by a UXO specialist and not automated.
- The inspection asset may be a sacrificial anode. This refers to the measurement of conductivity for the cathodic protection elements (anodes) of a subsea structure. If the inspection sensor 24c is a cathodic protection probe, then the inspection criteria may be:
   - Contact: the probe has physical contact with the anode (i.e., a binary threshold condition).
   - Probe reading: the value measured by the probe (i.e., a binary threshold condition or a value).
- The inspection asset may be a flooded member survey. This refers to the detection of water into a part of the subsea structure. If the inspection sensor 24c is an ultrasonic sensor or a radioactive sensor, then the inspection criteria may be:
   - Contact or proximity: the sensor has physical contact, or it is close enough to the structure to make an ultrasonic or radioactive sensor measurement (i.e., a binary threshold condition).
- The inspection asset may be a subsea foundation (Scour survey). This refers to the inspection of any subsea foundations. If the inspection sensor 24c is a multibeam echo sounder (MBES) or a camera, then the inspection requirements can be:
   - Point density: at least a minimum number of sonar echos per unit volume or area for the inspected environment is recorded with the sonar.
   - Range: distance from the inspection sensor 24c to the subsea foundations is within one or more threshold conditions (e.g., minimum range, and maximum range), for both sensors.
- The inspection asset may be an underwater Inspection In Lieu of Dry-Dock (UWILD). This refers to the inspection of a submerged hull, whilst the vessel is stationary in the port. The aim is to detect defects and anomalies, to aid maintenance of the vessel. If the inspection sensor 24c is a camera or a sonar, then the inspection criteria may be:
   - Range: distance from camera or sonar to the structure is within one or more threshold conditions (e.g., minimum range, and maximum range).
   - Number of captured frames: at least a minimum number of frames of a voxel of the underwater structure are recorded (for both, camera and sonar).

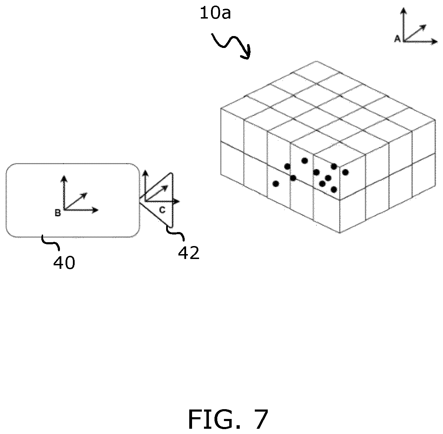

Figure 7 shows an example whereby a sensor 42 is positioned offset from a AUV 40. The sensor 42 may be illustrative of any of the occupancy sensor 24a, the classification sensor 24b, and the inspection sensor 24c. The spatial 3D data structure 10a is referred to global frame A. Measured 3D points (black circles) are referred to the sensor 42 frame C. The AUV 40 position, established at the centre of the vehicle as frame B, is measured with respect to the global frame A. The offset between the AUV 40 centre frame B and the sensor 42 frame C is provided, calibrated or estimated over the time if the sensor 42 is mounted in a dynamic mechanism (like pan and tilt mechanisms).

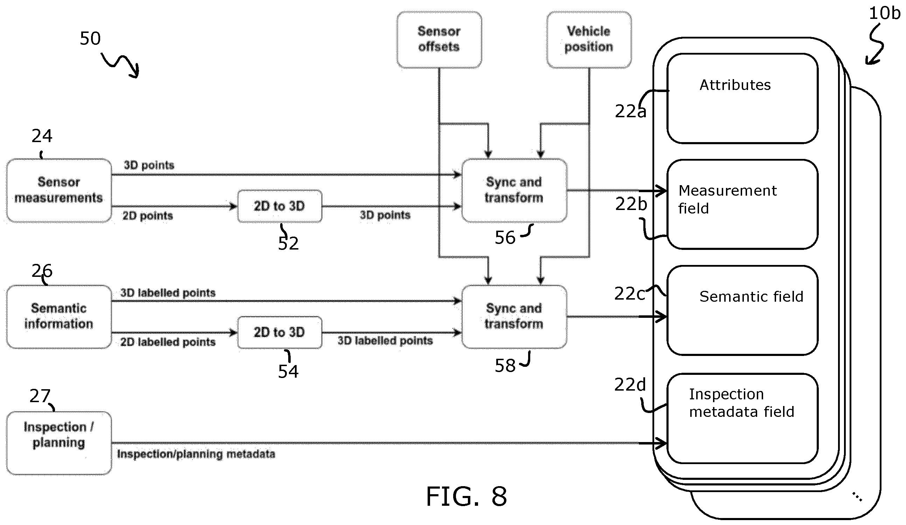

Figure 8 shows a representation of a computer system 50 for providing sensor measurements and populating associated content 10b of the 3D spatial data structure 10a. The computer system 50 of Figure 8 shows all of the features of the computer system 20 of Figure 2, in addition to certain optional features. The same reference numerals are used to denote the same/corresponding features in relation to Figure 2 and will not be described in detail again below.

The additional modules of the computer system 50 of Figure 8 enable compatibility with certain sensors. That is, not all raw sensor data can be fed into the content 10b of the 3D spatial data structure 10a directly. In some examples, it is necessary to process the data before its insertion into the content 10b of the 3D spatial data structure 10a, using a 2D to 3D module 52, 54 and/or a sync and transform module 56, 58.

The 2D to 3D modules 52, 54 of the computer system 50 may be used if the occupancy sensor 24a or classification sensor 24b output 2D image data. The 2D to 3D modules 52, 54 are configured to derive 3D points from 2D data. 2D image data may be projected into 3D space to be added to the content 10b of the 3D spatial data structure 10a. That is, the 2D to 3D modules 52, 54 are configured to determine the transformation from 2D image data to the 3D voxels. The content 10b of a voxel which corresponds to the spatial volume in the survey environment represented by the image data may be modified by the output of the 2D to 3D modules 52, 54. The 2D to 3D modules 52, 54 may not be required if the sensor provides 3D image data, or 3D image data can be readily determined, for example: a stereo camera sensor can use the disparity to calculate to Z, RGBD image sensors have a depth component by default, some sonar sensors produce 3D points directly or it can be derived from the ping delay, etc. This process may require known sensor calibration parameters (such as the intrinsics and extrinsics, provided by a pose sensor).

If the occupancy sensor data represents two-dimensional image data, then the 2D to 3D module 52 is configured to apply a 2D to 3D transformation to the occupancy sensor data to generate 3D occupancy data. The 2D to 3D module 52 may be configured to modify the content of the measurement field of the corresponding voxel based on the 3D occupancy data.

The semantic information module 26 may determine if received image data comprises semantic information. Semantic information may be determined using 2D or 3D image data (and/or sonar data, and/or LiDAR data, etc.) and may be used to generate a 2D segmentation map containing one or more objects which can each be associated with a semantic classification label. The one or more objects may include the inspection asset. The 2D segmentation map may contain a predicted semantic classification label per pixel, along with a confidence value. The 2D to 3D module 54 is then configured to apply a 2D to 3D transformation to the 2D segmentation map to generate a 3D segmentation map. The semantic information module 26 may identify the voxels of the 3D spatial data structure 10a which are associated with semantic classification labels of the 3D semantic segmentation map. The semantic information module 26 is arranged to modify the semantic classification label (i.e., the content) of the semantic classification field 22c associated with each voxel of the 3D spatial data structure 10a. That is, each semantic classification field 22c associated with the spatial volume in the survey environment represented by the 2D segmentation map, is modified.

The synchronisation and transform module 56, 58 of the computer system 50 may be used to compensate for the offset between the mobile vehicle 40 centre frame B and the sensor 42 frame C. Moreover, 3D data received by the sync and transform module 56, 58 may not be synchronised with the measured/estimated vehicle position, i.e., they may arrive at different times. The synchronisation and transform modules 56, 58 ensure that only the voxels which correspond to the spatial volume in the survey environment represented by the image data is modified, i.e., only the correct voxel content 10b is modified. The synchronisation and transform modules 56, 58 may comprise a time synchronisation mechanism for the occupancy sensors 24a and classification sensors 24b and the localisation system (e.g., the SLAM module). The time synchronisation mechanism may be a Pulse Per Second (PPS) protocol or a Network Time Protocol (NTP). Once all the sensors 24a, 24b and localisation mechanisms share the same source of time, the data streams may be synchronized using their timestamps.

In an example, and with reference to Figure 7, all the sensor data (occupancy sensor data and semantic classification data) will be in the same coordinate system as the vehicle 40 (i.e., centre frame B of Figure 7), and not relative to the 3D spatial data structure 10a (i.e., global frame A of Figure 7). The computer system 20, 50 may transform all the incoming sensor data from the centre frame B to the global frame A of the 3D spatial data structure 10a based on the vehicle 40 position and, if any, the sensor offsets. The position of the vehicle 40 can be obtained from a positioning system, such as DVL, SLAM, GNSS or any other existing positioning system. The vehicle 40 position is provided as the position and orientation of the vehicle base frame with respect to a global frame A. The sensor offset represents the transformation from the sensor internal frame C to the vehicle base frame B.

Throughout a survey, the sensors of the mobile vehicle 40 may sense the same spatial volume in the 3D survey environment multiple times. This can occur when multiple sensors are pointed to the same space or when the same sensor revisits a previously visited space. Thus, the sensor measurements module 24, semantic information module 26, and/or inspection module 27 may modify the content of the respective measurement field 22b, semantic label field 22c, and/or inspection field 22d two or more times. In this scenario, a data fusion mechanism may be used to fuse or accumulate all the information into the unit. The fusion of different measurements and/or metadata for a single modifiable content (i.e., measurement field 22b, semantic label field 22c, inspection field 22d) of a single spatial unit (e.g., voxel 12a) may be done in a probabilistic manner. The data fusion mechanism can interact and modify the modifiable contents 10b associated with each spatial unit, but it cannot modify their attributes 22a.

Different mechanisms can be applied for data fusion, from simple rules to more complex approaches, like probabilistic-based fusion among others. The fusion mechanism can be different for each type of spatial unit content, resulting in multiple internal fusion systems (e.g., measurement fusion, semantic label fusion and inspection data fusion).

For example, a rule-based fusion mechanisms may comprise one of:
- If the sensor measurements module 24 tries to write two or more occupancy data to one measurement field, then a simple time-based rule that keeps the most recent occupancy data can occupy the one measurement field.
- If the semantic information module 26 tries to write two or more semantic classification labels to one semantic label field, then the semantic classification label with the largest semantic confidence can occupy the one semantic label field.

For example, a probabilistic-based fusion mechanisms may comprise one of:
- If the sensor measurements module 24 tries to write two or more occupancy data to one measurement field, then a probabilistic formula based upon the measurement uncertainty, the elapsed time since last reading, number of visits, etc., may be used. The output of the probabilistic formula is a 0-1 probability value of occupancy.
- If the semantic information module 26 tries to write two or more semantic classification labels to one semantic label field, then a probabilistic formula based upon the label confidence, the ratio of the label volume versus the spatial unit volume, etc., may be used. The output of the probabilistic formula is a 0-1 probability value of a semantic classification label.

Each module of the computer system 20, 50 may be a distinct data processor, or may be operated by part of a data processor or may be operated by multiple data processors. A mobile vehicle may comprise the whole computer system 20, 50 of any embodiment. Alternatively, a mobile vehicle may comprise part of the computer system 20, 50, for example, the content 10b of the 3D spatial data structure 10a may be stored on an external server, and the mobile device may comprise the sensor measurements module 24, semantic information module 26, and inspection module 27, and a transceiver configured to transmit/receive data to/from the external server.

While Figure 6 shows a system for operating a mobile vehicle to perform a survey, the system comprising the computer system 20 described with reference to Figures 2 to 5, the system may alternatively comprise the computer system 50 described with reference to Figures 7 and 8.

In any embodiment, some or all of the components of the computing device can be contained within a casing defining a sealed interior space for isolating the components from the subsea or other harsh environment, as described in PCT/EP2019/079847 for example.

In any embodiment the spatial units (e.g., voxels) may be of the same shape (e.g., including the same volume/sizes).

Alternatively, the spatial units may be different shapes. If the spatial units are different shapes, then it is preferable if the shapes tessellate in 3D space. If the spatial units may be different shapes, then the attribute 22a may be modifiable (e.g., within constraints), for example, each spatial unit may be separable into octree volumes (i.e., a big spatial unit is separable into smaller spatial units). Each spatial unit attribute 22a may define a particular space volume, expressed as an axis-aligned bounding box, a chosen middle point inside this box. A parent spatial unit may be divided using the X, Y, Z planes to generate eight child spatial units of the parent spatial unit according to the octree structure. Each child spatial unit, in turn, may be another internal spatial unit, so it has his own middle point and may give rise to another eight child spatial units. The middle point of a child spatial unit must be within the volume defined by the parent spatial unit.

The sensor measurements module 24, semantic information module 26, and the inspection module 27 may each be configured to update multiple measurement fields 22b, semantic label fields 22c, and inspection fields 22d, respectively. For example, in an octree structure, semantic information module 26 may update the semantic label field 22c of all child spatial units of a parent spatial unit. Similarly, child spatial units may inherit any of the content 10b of the measurement fields 22b, semantic label fields 22c, and/or inspection fields 22d, from their parent spatial units. That is, the content of each measurement field 22b of a set of spatial units may be modified simultaneously based on the occupancy sensor data. The content of each semantic label field 22c of a set of spatial units may be modified simultaneously based on the classification sensor data. The content of each inspection field 22d of a set of spatial units may be modified simultaneously based on the inspection sensor data.

Optionally, an occupancy sensor, semantic sensor, and inspection sensor may be the same sensor, or different sensors.

Optionally, the semantic information module 26 may perform semantic segmentation on the classification sensor data to generate a semantic segmentation map.

Optionally, the associated content 10b comprising a set of unique attributes and modifiable content for each data units may be exported or available after the survey is complete.

In embodiments of the invention the inspection module 27 are described with reference to a sensor measurements module 24 and semantic information module 26. Alternatively, the inspection module 27 and the inspection field 22d may be distinct from a system which performs mapping and optionally semantic identification. That is, the inspection module 27 and the inspection field 22d may be provided to an existing system which provides a semantic-like map.

### Numbered Statements

Numbered Statement 1. A computer implemented method of populating a data structure suitable for conducting a survey in an environment, the method comprising:
determining that a spatial unit of a set of spatial units is associated with a semantic classification label representative of an inspection asset;
receiving inspection criteria associated with the inspection asset, wherein the inspection criteria comprises a threshold condition associated with an inspection sensor;
receiving inspection sensor data, from the inspection sensor, representing the inspection asset;
applying the threshold condition to the inspection sensor data to generate inspection data; and,
modifying an inspection data content of the spatial unit based on the inspection data.

Numbered Statement 2. The method of numbered statement 1, wherein the set of spatial units is each associated with a modifiable content, the modifiable content comprising inspection field comprising the inspection data.

Numbered Statement 3. The method of any of numbered statements 1 or 2, wherein the inspection further comprises a second threshold condition associated with the inspection sensor; the method further comprising:
applying the second threshold condition to the inspection sensor data to generate second inspection data; and,
Modifying the inspection data content of the spatial unit based on the second inspection data.

Numbered Statement 4. The method of any preceding numbered statement, the method further comprising:
receiving a second inspection criteria comprising a third threshold condition associated with a second inspection sensor;
receiving second inspection sensor data, from the second inspection sensor, representing the inspection asset;
applying the third threshold condition to the inspection sensor data to generate second inspection data; and,
modifying the inspection data content of the spatial unit based on the second inspection data.

Numbered Statement 5. The method of any preceding numbered statement, wherein an inspection confidence value is associated with the inspection data, wherein the method only receives the second inspection sensor data if the inspection confidence value is greater than an inspection confidence threshold.

Numbered Statement 6. The method of any preceding numbered statement, the method further comprising:
determining that a second spatial unit of the set of spatial units is associated with a second semantic classification label representative of a second inspection asset;
receiving a third inspection criteria associated with the second inspection asset and the inspection sensor, wherein the third inspection criteria comprises a fourth threshold condition;
receiving third inspection sensor data, from the inspection sensor, representing the second inspection asset;
applying the fourth threshold condition to the third inspection sensor data to generate third inspection data; and,
modifying an inspection field of the second spatial unit based on the third inspection data.

Numbered Statement 7. The method of any preceding numbered statement,
wherein the threshold condition is one of:
a defined blurriness factor of captured inspection sensor data from the inspection sensor;
a defined number of captured inspection sensor data from the inspection sensor;
a defined maximum range between the inspection asset and the inspection sensor;
a defined minimum range between the inspection asset and the inspection sensor;
a defined total number of received depth points per unit volume, wherein the inspection sensor is a sonar sensor;
a defined measurement value of the inspection sensor;
a binary determination that the inspection sensor is in contact with the inspection asset; or,
a binary determination that a tool [ruler] is in contact with the inspection asset.

Numbered Statement 8. The method of any preceding numbered statement, the method further comprising modifying or terminating the survey inspection once the inspection criteria is met.

Numbered Statement 9. The method of any of numbered statements 2 to 8, wherein the set of spatial units is further associated with an attribute defining an exclusive spatial volume in a 3D survey environment, wherein the modifiable content further comprises a measurement field comprising occupancy data associated with the attribute.

Numbered Statement 10. The method of numbered statement 9, the method further comprising:
receiving occupancy sensor data, from an occupancy sensor, representing the survey environment; and,
modifying the content of the measurement field of the spatial unit based on the occupancy sensor data.

Numbered Statement 11. The method of numbered statement 10, wherein the content of each measurement field of the set of spatial units is modified simultaneously based on the occupancy sensor data.

Numbered Statement 12. The method of any of numbered statements 9 to 11, the method further comprising: processing the occupancy sensor data to develop a SLAM 3D model of the survey environment.

Numbered Statement 13. The method of any of numbered statements 9 to 12, wherein the occupancy sensor data represents two-dimensional image data, the method further comprising:
applying a 2D to 3D transformation to the occupancy sensor data to generate 3D occupancy data; and,
modifying the content of the measurement field of the spatial unit based on the 3D occupancy data.

Numbered Statement 14. The method of any of numbered statements 9 to 13, wherein the inspection sensor is the occupancy sensor.

Numbered Statement 15. The method of any of numbered statements 2 to 14, wherein the modifiable content further comprises a semantic label field comprising a semantic classification label.

Numbered Statement 16. The method of numbered statement 15, the method further comprising:
determining a semantic classification label of the inspection asset based on classification sensor data, from a classification sensor; and,
modifying the content of the semantic label field of the spatial unit based on the semantic classification label.

Numbered Statement 17. The method of numbered statement 16, the method further comprising:
determining that the semantic label field of the spatial unit is occupied by a previous semantic classification label; and,
performing probabilistic based data-fusion to determine the content of the semantic label field based on the previous semantic classification label and the semantic classification label.

Numbered Statement 18. The method of any of numbered statements 15 to 17, wherein a semantic inference step determines the semantic classification label based on the occupancy sensor data.

Numbered Statement 19. The method of numbered statement 18, the semantic inference step also determines a confidence value associated with the semantic classification label.

Numbered Statement 20. The method of any of numbered statements 15 to 19, the method further comprising:
wherein the classification sensor data represents two-dimensional image data;
performing semantic segmentation on the classification sensor data to generate a 2D segmentation map;
determining that the 2D segmentation map contains the inspection asset;
applying a 2D to 3D transformation to the 2D segmentation map to generate a 3D segmentation map comprising one or more semantic classification labels; and,
modifying the content of the semantic label field of the spatial unit based on the 3D segmentation map.

Numbered Statement 21. The method of any of numbered statements 15 to 20, wherein the inspection sensor is the classification sensor.

Numbered Statement 22. A computing system for performing the method of numbered statements 1-21, the computing system comprising:
an occupancy sensor;
   an inspection sensor;
a data processor configured to:
   perform an inspection planning algorithm to plan a path for a mobile vehicle to follow which fulfils an inspection criteria, wherein the path is planned via a 3D model of the environment comprising a set of spatial units; and,
   perform the method of any of numbered statements 1-21.

Although the invention has been described above with reference to one or more preferred embodiments, it will be appreciated that various changes or modifications may be made without departing from the scope of the invention as defined in the appended claims. The word "comprising" can mean "including" or "consisting of" and therefore does not exclude the presence of elements or steps other than those listed in any claim or the specification as a whole. The mere fact that certain measures are recited in mutually different dependent claims does not indicate that a combination of these measures cannot be used to advantage.

## Claims

1. A computer implemented method of populating a data structure suitable for conducting a survey in an environment, the method comprising:
determining that a spatial unit of a set of spatial units is associated with a semantic classification label representative of an inspection asset;
receiving inspection criteria associated with the inspection asset, wherein the inspection criteria comprises a threshold condition associated with an inspection sensor;
receiving inspection sensor data, from the inspection sensor, representing the inspection asset;
applying the threshold condition to the inspection sensor data to generate inspection data; and,
modifying an inspection data content of the spatial unit based on the inspection data.

2. The method of claim 1, wherein the set of spatial units is each associated with a modifiable content, the modifiable content comprising inspection field comprising the inspection data.

3. The method of any of claims 1 or 2, wherein the inspection further comprises a second threshold condition associated with the inspection sensor; the method further comprising:
applying the second threshold condition to the inspection sensor data to generate second inspection data; and,
modifying the inspection data content of the spatial unit based on the second inspection data.

4. The method of any preceding claim, the method further comprising:
receiving a second inspection criteria comprising a third threshold condition associated with a second inspection sensor;
receiving second inspection sensor data, from the second inspection sensor, representing the inspection asset;
applying the third threshold condition to the inspection sensor data to generate second inspection data; and,
modifying the inspection data content of the spatial unit based on the second inspection data.

5. The method of any preceding claim, wherein an inspection confidence value is associated with the inspection data, wherein the method only receives the second inspection sensor data if the inspection confidence value is greater than an inspection confidence threshold.

6. The method of any preceding claim, the method further comprising:
determining that a second spatial unit of the set of spatial units is associated with a second semantic classification label representative of a second inspection asset;
receiving a third inspection criteria associated with the second inspection asset and the inspection sensor, wherein the third inspection criteria comprises a fourth threshold condition;
receiving third inspection sensor data, from the inspection sensor, representing the second inspection asset;
applying the fourth threshold condition to the third inspection sensor data to generate third inspection data; and,
modifying an inspection field of the second spatial unit based on the third inspection data.

7. The method of any preceding claim, wherein the threshold condition is one of:
a defined blurriness factor of captured inspection sensor data from the inspection sensor;
a defined number of captured inspection sensor data from the inspection sensor;
a defined maximum range between the inspection asset and the inspection sensor;
a defined minimum range between the inspection asset and the inspection sensor;
a defined total number of received depth points per unit volume, wherein the inspection sensor is a sonar sensor;
a defined measurement value of the inspection sensor;
a binary determination that the inspection sensor is in contact with the inspection asset; or,
a binary determination that a tool is in contact with the inspection asset.

8. The method of any of claims 2 to 7, wherein the set of spatial units is further associated with an attribute defining an exclusive spatial volume in a 3D survey environment, wherein the modifiable content further comprises a measurement field comprising occupancy data associated with the attribute, and optionally wherein the inspection sensor is the occupancy sensor.

9. The method of claim 8, the method further comprising:
receiving occupancy sensor data, from an occupancy sensor, representing the survey environment; and,
modifying the content of the measurement field of the spatial unit based on the occupancy sensor data, and optionally wherein the content of each measurement field of the set of spatial units is modified simultaneously based on the occupancy sensor data.

10. The method of any of claims 8 to 9, wherein the occupancy sensor data represents two-dimensional image data, the method further comprising:
applying a 2D to 3D transformation to the occupancy sensor data to generate 3D occupancy data; and,
modifying the content of the measurement field of the spatial unit based on the 3D occupancy data.

11. The method of any of claims 2 to 10, wherein the modifiable content further comprises a semantic label field comprising a semantic classification label, and optionally wherein the inspection sensor is the classification sensor.

12. The method of claim 11, the method further comprising:
determining a semantic classification label of the inspection asset based on classification sensor data, from a classification sensor; and,
modifying the content of the semantic label field of the spatial unit based on the semantic classification label, and optionally, the method further comprising:
determining that the semantic label field of the spatial unit is occupied by a previous semantic classification label; and,
performing probabilistic based data-fusion to determine the content of the semantic label field based on the previous semantic classification label and the semantic classification label.

13. The method of any of claims 11 to 12, wherein a semantic inference step determines the semantic classification label based on the occupancy sensor data, and optionally the semantic inference step also determines a confidence value associated with the semantic classification label.

14. The method of any of claims 11 to 13, the method further comprising:
wherein the classification sensor data represents two-dimensional image data;
performing semantic segmentation on the classification sensor data to generate a 2D segmentation map;
determining that the 2D segmentation map contains the inspection asset;
applying a 2D to 3D transformation to the 2D segmentation map to generate a 3D segmentation map comprising one or more semantic classification labels; and,
modifying the content of the semantic label field of the spatial unit based on the 3D segmentation map.

15. A computing system for performing the method of claims 1 to 14, the computing system comprising:
an occupancy sensor;
an inspection sensor;
a data processor configured to:
perform an inspection planning algorithm to plan a path for a mobile vehicle to follow which fulfils an inspection criteria, wherein the path is planned via a 3D model of the environment comprising a set of spatial units; and,
perform the method of any of claims 1 to 14.
